(19) Europäisches Patentamt

European Patent Office

Office européen des brevets

(11) EP 1 128 652 A2

(12) **EUROPÄISCHE PATENTANMELDUNG**

(43) Veröffentlichungstag:
**29.08.2001 Patentblatt 2001/35**

(51) Int Cl.$^7$: **H04M 15/00**

(21) Anmeldenummer: **01104035.9**

(22) Anmeldetag: **20.02.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **23.02.2000 DE 10008288**

(71) Anmelder: **SIEMENS AKTIENGESELLSCHAFT**
**80333 München (DE)**

(72) Erfinder:
• **Vackier, Erwin**
  **8700 Tielt (BE)**
• **Van Daele, Karel**
  **9090 Melle (BE)**

(54) **Vorrichtung und Verfahren zur Verarbeitung von Gebühreninformationen**

(57)     Die vorliegende Erfindung betrifft eine Vorrichtung (1) zum Versenden von Zählimpulsen an ein Endgerät (2) eines Fernsprechteilnehmers zur Gebührenanzeige während der Dauer einer Verbindung, wobei die Vorrichtung (1) Gebühreninformationen, die als Betragswerte in der Vermittlungsstelle (3) verfügbar sind, in eine entsprechende Anzahl von Zählimpulsen umrechnet.

Des weiteren betrifft die vorliegende Erfindung ein in dieser Vorrichtung angewendetes Verfahren zum Versenden von Zählimpulsen an ein Endgerät (2).

**FIG 4**

EP 1 128 652 A2

**Beschreibung**

Die vorliegende Erfindung betrifft eine Vorrichtung zur Verarbeitung von Gebühreninformationen für zumindest eine Verbindung innerhalb zumindest eines Kommunikationsnetzes, wie sie im Oberbegriff des beigefügten Anspruches 1 beschrieben ist, und ein in dieser Vorrichtung angewendetes Verfahren zur Verarbeitung von Gebühreninformationen, wie es im Oberbegriff des beigefügten Anspruches 7 beschrieben ist.

Die Gebührenabrechnung eines Fernsprechteilnehmers, der Dienste über das öffentliche Fernsprechnetz (PSTN, Public Switched Telephone Network) nutzt, erfolgt auf der Basis von Tarifen. Diese Tarife können dabei, je nach Art der Verbindung bzw. der genutzten Dienste, eine Pauschalgebühr, ein zeitabhängiger Tarif oder eine Kombination von beiden sein. In seiner einfachsten Form besteht ein zeitabhängiger Tarif aus einer Gebühr und einer Periodendauer, wobei die Gebühren am Anfang jeder Periode über die Zeitdauer der Verbindung aufsummiert werden.

Die aufsummierten Gebühren für eine Verbindung können während der Verbindungsdauer an den Endgeräten des Teilnehmers angezeigt werden. Zur Gebührenanzeige müssen die aktuellen, aufsummierten Gebühren für eine Verbindung während der Verbindungsdauer immer verfügbar sein. Bei zeitabhängigen Tarifen heißt das, daß die angezeigten Gebühren während der Dauer einer Verbindung ständig steigen und somit aktualisiert werden müssen.

In der analogen Telefonie gibt es zwei Verfahren zur Übermittlung der Gebühreninformationen zum Endgerät des Teilnehmers. Bei dem einen Verfahren erfolgt die Signalisierung über einen 12 oder 16 kHz Ton. Hiermit können lediglich ganze Zahlen, also nur Zählimpulse und keine Währung, übermittelt werden.

Bei dem anderen Verfahren erfolgt die Signalisierung über das sog. Frequency Shift Keying-Verfahren. Dabei wird die Gebühreninformation in Währung als Dezimalzahl zum geeigneten Endgerät gesendet. Dieses Verfahren wird jedoch kaum verwendet.

Bei ISDN kann die Gebühreninformation, in vom Protokoll abhängigen Nachrichten, als Zählimpuls oder als Währungsbetrag übertragen werden. Das benutzte Format (Zählimpulse oder Währung) ist dabei Teilnehmerspezifisch.

Ein Zählimpuls ist ein theoretischer Wert ohne Einheitsangabe zur Darstellung von Gebühren. Bei der eigentlichen Rechnungserstellung werden dann die Zählimpulse in Währung umgerechnet. So ist z.B. bei der Deutschen Telekom in den meisten Fällen ein Zählimpuls gleich 12 Pfennig.

Ein Tarif bzw. die Parameter eines Tarifs (d.h. Kosten pro Periodendauer und die Periodendauer) können in einer Vermittlungsstelle entweder als Zählimpulse oder als Betrag (z.B. in einer bestimmten Währung) als präziser Wert verfügbar sein. Ist der Tarif als Zählimpuls verfügbar, so repräsentiert jeder Zählimpuls einen bestimmten Betrag. Ob ein Tarif als Betrag oder als Zählimpuls verfügbar ist, hängt von den technischen Gegebenheiten der Telefongesellschaft bzw. der Vermittlungsstelle ab. So sind z.B. bestimmte Dienstleistungen nur als Betrag verfügbar, jedoch erfolgt die Gebührenanzeige bei den Endgeräten der Teilnehmer in der Regel über Zählimpulse.

Beim Stand der Technik können Gebühren, die als Betrag in der Vermittlungsstelle vorliegen, nicht an Endgeräten angezeigt werden, die nur Zählimpulse verarbeiten können.

Die Aufgabe der vorliegenden Erfindung ist somit, eine Vorrichtung zum Versenden von Zählimpulsen an ein Endgerät eines Fernsprechteilnehmers in einem Fernsprechnetz gemäß dem Oberbegriff des beigefügten Anspruches 1 und ein Verfahren zum Versenden von Zählimpulsen gemäß dem Oberbegriff des beigefügten Anspruches 7 bereitzustellen, bei denen eine Anzeige von Gebühren, die als Betrag verfügbar sind, an Endgeräten, die Zählimpulse empfangen können, ermöglicht wird.

Die Aufgabe wird durch eine Vorrichtung gemäß den Merkmalen des Oberbegriffs des beigefügten Anspruch 1 und ein Verfahren gemäß den Merkmalen des Oberbegriff des beigefügten Anspruch 7 gelöst.

Gemäß der vorliegenden Erfindung wird eine Anzeige von Gebühren beim Teilnehmer ermöglicht, die in der Vermittlungsstelle zumindest teilweise lediglich als Betragswerte vorliegen.

Dadurch ergeben sich folgende Vorteile:

Die Gebührenanzeige ist für alle Teilnehmer möglich unabhängig vom zur Verfügung stehenden Tarifformat (in Betrag oder Zählimpulsen) und unabhängig von den Endgeräten des Teilnehmers (analog bzw. ISDN).

Die Zählimpulse, die aus einer Konvertierung aus Beträgen resultieren, haben das gleiche Format, wie Tarife, die in Zählimpulsen vorliegen. Somit müssen die Endgeräte (z.B. öffentliche Fernsprecher, Telefone, in welchen Zählimpulse in Beträge umgerechnet werden, private Nebenstellenanlagen, die eigene Rechnungen generieren), die Zählimpulse verarbeiten, nicht angepaßt werden.

Die Gebührenanzeige ist somit für Tarife möglich, die als Betrag oder als Zählimpulse vorliegen. Dadurch, daß alle Tarife in Zählimpulsen berechnet werden, können verschiedene Tarifformate kombiniert werden.

Außerdem kann von dem Betreiber des öffentlichen Fernsprechnetzes die Konvertierungsmethode gewählt werden, die am besten zu den Endgeräten der Teilnehmer paßt.

Bevorzugte Ausgestaltungen der vorliegenden Erfindung sind in den Unteransprüchen 2 bis 6 und 7 bis 14 wiedergegeben.

Die erzeugten Zählimpulse können gemäß der vorliegenden Erfindung in regelmäßigen Zeitabständen verwendet werden. Dabei werden in diesen Zeitabständen die angefallenen Gebühren berechnet, in Zählimpulse umgewandelt und an das Endgerät versendet. Am Ende der Verbindung werden ebenfalls die den angefallenen Gebühren entsprechenden Zählimpulse berechnet und versendet. Diese, sogenannte asynchrone, Konvertierung von Beträgen in Zählimpulse wird bevorzugt bei ISDN-Systemen angewendet, da nach dem Verbindungsabbau noch Zählimpulse an das ISDN-Endgerät versendet werden können.

Bei einer synchronen Konvertierung von Beträgen in Zählimpulse werden Zählimpulse zu dem Zeitpunkt erzeugt und versendet, zu dem die aufsummierten angefallenen Gebühren für die Verbindung ein Vielfaches von dem Betrag betragen, der dem Wert eines Zählimpulses entspricht. Die synchrone Konvertierung von Beträgen in Zählimpulse wird bevorzugt bei analogen Systemen angewendet, bei denen nach dem Verbindungsabbau keine Zählimpulse mehr an das Endgerät versendet werden können.

Die Zählimpulse werden dabei jeweils zu Beginn einer Zählperiode, für die Gebühren entsprechend eines Zählimpulses anfallen, berechnet und versendet, damit nicht zu wenig Gebühren am Endgerät des Teilnehmers angezeigt werden, um Beanstandungen durch den Teilnehmer zu vermeiden. Die Abweichung zwischen den angezeigten und den tatsächlich angefallenen Gebühren beträgt somit zwischen Null und maximal dem Betrag eines Zählimpulses.

Die vorliegende Erfindung wird nachfolgend anhand bevorzugter Ausführungsbeispiele unter Bezug auf die beigefügten Zeichnungen näher erläutert, in denen zeigen

Figur 1 ein Beispiel für eine Tarifstruktur einer Verbindung,

Figur 2a und 2b jeweils ein Beispiel für die asynchrone Umwandlung eines Betrages in Zählimpulse ohne und mit einer Mindest- bzw. Grundgebühr,

Figur 3a und 3b jeweils ein Beispiel für eine synchrone Umwandlung eines Betrages in Zählimpulse ohne und mit einer Mindest- bzw. Grundgebühr, und

Figur 4 den schematischen Aufbau einer Vermittlungsstelle mit einem daran angeschlossenen Teilnehmer.

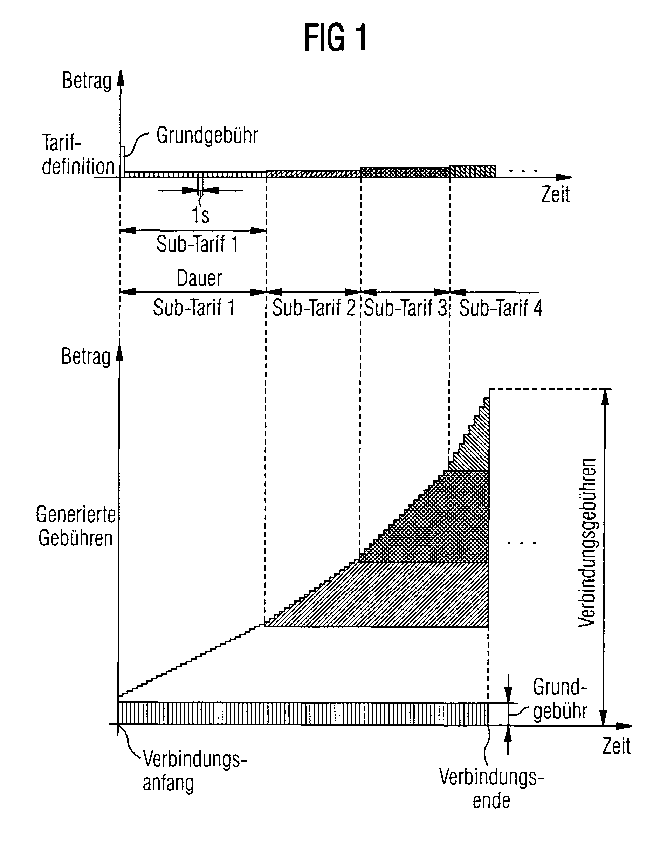

Anhand von Figur 1 wird nachfolgend beispielhaft erläutert, wie die Gebühren aufgrund einer bestimmten Tarifstruktur für eine Verbindung zustandekommen. Der Tarif in dem Beispiel enthält eine Grundgebühr, die einmalig zu Beginn einer Verbindung anfällt. Im weiteren enthält der Beispieltarif bis zu vier Subtarife, die von der Dauer der Verbindung abhängig sind.

Jeder Tarif bzw. Subtarif besteht aus einer Gebühreneinheit und einer Dauer. Die Gebühreneinheit wird periodisch (z.B. mit einer Periodendauer von 1 s) während der Dauer eines Tarifs bzw. Subtarifs aufsummiert; die Dauer eines Tarifs bzw. Subtarifs muß somit ein Vielfaches der Periodendauer betragen. Die Gebühren der jeweiligen Tarife werden zu Beginn jeder Periodendauer aufsummiert.

Der erste Subtarif startet, sobald die Verbindung aufgebaut ist. Die jeweiligen weiteren Subtarife starten nach der Dauer des jeweiligen vorherigen Subtarifs. Der letzte Subtarif hat eine unbegrenzte Dauer. Die Aufsummierung der Gebühren hört in dem Moment auf, in dem die Verbindung unterbrochen wird.

Die Berechnung der Gebühren als Betrag kann somit mit der folgenden Formel (1) berechnet werden:

$$(1) \quad Geb\ddot{u}hren = Grundgeb\ddot{u}hr + \sum_{i=1}^{n} (Geb\ddot{u}hreneinheit\_Subtarif_i * Dauer\_Subtarif_i / Periodendauer)$$

wobei n die Anzahl der Subtarife und Gebühreneinheit Subtarif$_i$ die Gebühreneinheit des jeweiligen Subtarifs als Betrag ist.

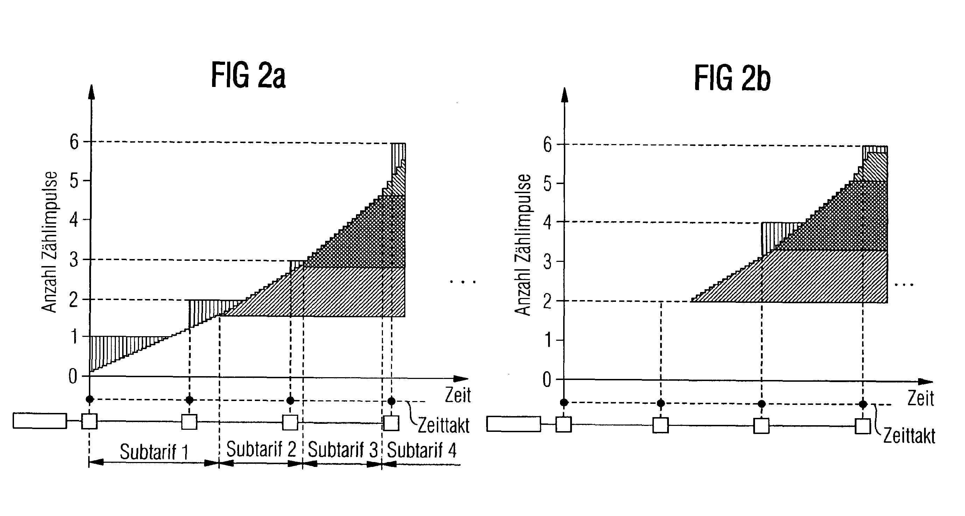

Anhand der grafischen Darstellung in den Figuren 2a und 2b wird nachfolgend die Umwandlung von Gebühren, die als Betrag verfügbar sind, in Zählimpulse in bestimmten, regelmäßigen (z.B. alle 10 s) Zeitabständen und am Ende der Verbindung gezeigt (asynchrone Konvertierung). Figur 2a zeigt dabei die Gebührenaufteilung einer Verbindung mit mehreren Subtarifen ohne Grundgebühr und Figur 2b die Vergebührung einer Verbindung mit mehreren Subtarifen und einer Grundgebühr.

Für Verbindungen, in denen nur ein Tarif zum Tragen kommt, berechnet sich die Anzahl der zu sendenden Zählimpulse unter Verwendung von Formel (1), mit der die Gebühren einer Verbindung als Betrag berechnet werden, geteilt durch den Betrag, dem ein Zählimpuls entspricht. Die Anzahl der zu sendenden Zählimpulse $n_{Z\ddot{a}hlimpulse}$ berechnet sich somit nach Formel (2) wie folgt:

$$(2) \qquad n_{Z\text{ählim pulse}} = Verbindungsgebühren \ / \ Betrag_{Z\text{ählim puls}}$$

wenn der Wert $n_{Z\text{ählimpulse}}$ Dezimalstellen aufweist, dann wird auf den nächsthöheren ganzzahligen Wert aufgerundet, da $n_{Z\text{ählimpulse}}$ ein ganzzahliger Wert sein muß und die angezeigten Gebühren nicht weniger als die tatsächlich angefallenen Gebühren sein dürfen.

In den Figuren 2a und 2b wird gezeigt, wie die Anzahl der Zählimpulse, die am Anfang, am Ende und in bestimmten Zeitintervallen an das Endgerät versendet werden, berechnet wird. Der Beispieltarif in Figur 2a besteht aus vier Subtarifen, der Beispieltarif in Figur 2b beinhaltet zusätzlich eine Mindest- oder Grundgebühr, die einen Wert von exakt zwei Zählimpulsen entspricht.

Die Umwandlung von Gebühreninformationen bzw. Tarifen in eine Anzahl zu sendender Zählimpulse ist wesentlich komplexer, wenn nacheinander verschiedene Tarife zur Anwendung kommen. Der erste Tarif beginnt dabei am Anfang der Verbindung und endet, wenn er durch den zweiten Tarif ersetzt wird. Der zweite und jeder weitere Tarif beginnt jeweils nach einer bestimmten Verbindungsdauer. Bei derartigen Tarifstrukturen werden die Gebühren für den ersten Tarif nach Formel (1) berechnet und nach Formel (2) in Zählimpulse umgewandelt. Für die weiteren Tarife gilt, daß bis zu dem Moment, in dem der jeweils neue Tarif aktiviert wird, die bis dahin angefallenen Gebühren berechnet und als Zwischenergebnis abgespeichert werden.

In Figur 2a ist zu sehen, daß zu Beginn der Verbindung ein Zählimpuls an das Endgerät versendet wird, da bereits zu Beginn der Verbindung Gebühren anfallen. Nach bestimmten Zeitintervallen (typischerweise alle 10 s) wird die Anzahl der Zählimpulse neu berechnet und aktualisiert.

Im Beispiel von Figur 2a heißt das, daß zu Beginn der Verbindung ein Zählimpuls versendet wird, da bereits Gebühren anfallen. Nach einem Zeitintervall (von z.B. 10 s) werden die bis dahin angefallenen Gebühren aufgrund des zu der Zeit gültigen Tarifs und somit die bis dahin angefallenen Anzahl von Zählimpulsen neu berechnet, also insgesamt zwei Zählimpulse nach der Dauer des ersten Zeitintervalls. Das heißt im konkreten Beispiel, daß nach Ablauf des ersten Zeitintervalls ein weiterer Zählimpuls versendet wird.

Im Beispiel von Figur 2b werden zu Beginn der Verbindung zwei Zählimpulse versendet, da zu diesem Zeitpunkt bereits eine Mindest- bzw. Grundgebühr anfällt, die genau dem Betrag von zwei Zählimpulsen entspricht. Nach dem ersten Zeitintervall werden die angefallenen Gebühren neu berechnet. Da in diesem Beispiel keine neue Gebühr angefallen ist, bleibt die Anzahl der Zählimpulse gleich zwei. Es werden somit zu diesem Zeitpunkt keine neuen Zählimpulse erzeugt bzw. versendet.

Die Gebühren für jeden neuen Tarif werden mit Formel (1) berechnet. Die Berechnung beginnt mit dem Subtarif S, der für die jeweilige verstrichene Verbindungsdauer gültig ist und endet mit dem nächsten Subtarif, gemäß der Formel (3).

$$(3) \qquad \sum_{i=1}^{S-1} Dauer\_Subtarif_i \leq Verstrichene\_Verbindungsdauer < \sum_{j=1}^{S} Dauer\_Subtarif_j$$

Die Dauer, die für diesen Subtarif gültig ist, ist die Dauer, die nach Subtraktion der verstrichenen Verbindungsdauer gemäß Formel (4) übrigbleibt.

$$(4) \qquad Dauer\_Subtarif_S = (\sum_{j=1}^{S} Dauer\_Subtarif_j) - Verstrichene\_Verbindungsdauer$$

Die Zeiten werden dabei in Sekunden angegeben.

Die Berechnung wird periodisch mit jedem Subtarif wiederholt. Das Ergebnis, das nur den augenblicklich aktiven Subtarif enthält, wird zu den aufsummierten Gebühren, die jeweils am Ende des vorhergehenden Subtarifs gespeichert werden, dazuaddiert. Die Summe wird mit Formel (2) in Zählimpulse konvertiert.

Durch die Verwendung von Zwischenergebnissen wird die erforderliche Prozessorleistung und Speicherkapazität minimiert, da der erforderliche Rechenaufwand weniger komplex ist. Ohne Verwendung der Zwischenergebnisse müßten alle vorhergehenden Tarife bzw. Subtarife in jeder neuen Berechnung berücksichtigt werden.

Bei dieser beschriebenen asynchronen Konvertierung werden bei allen Berechnungen die Betragswerte herangezogen. Die Formel (2) basiert auf den gesamten Betragswerten.

Die asynchrone Konvertierung wird bevorzugt bei ISDN-Systemen angewendet, wo während der Verbindungsdauer Bündel von Zählimpulsen und nach Trennen der Verbindung noch Zählimpulse versendet werden könnten.

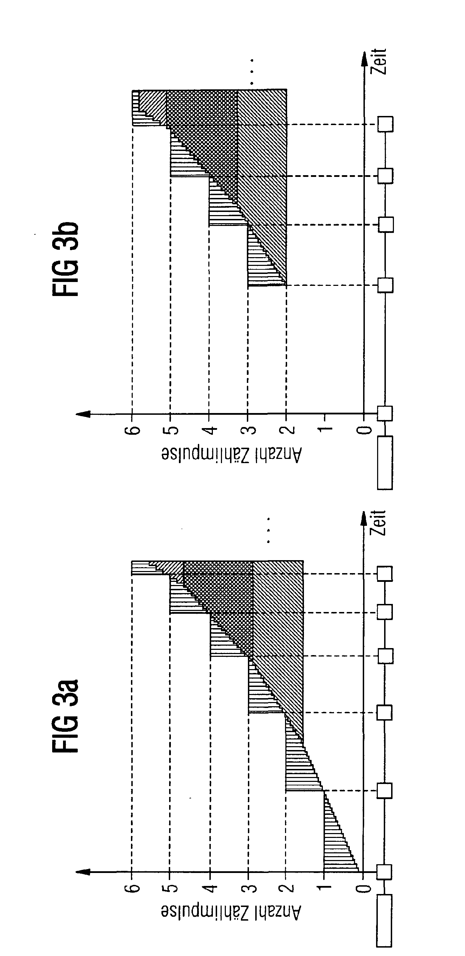

Anhand der Figuren 3a und 3b wird nachfolgend die synchrone Konvertierung der Gebühren in Zählimpulse erläutert. Synchron heißt, daß jeweils ein Zählimpuls erzeugt und versendet wird, sobald die seit dem letzten Zählimpuls neu angefallenen Gebühren für die Verbindung den Betragswert eines Zählimpulses entsprechen. Die Zählimpulse werden dabei jeweils im voraus versendet, damit das Endgerät nicht zu wenig Gebühren anzeigt. Außerdem müssen die Zählimpulse bei analogen Endgeräten im voraus versendet werden, da nach dem Verbindungsabbau im Gegensatz zu ISDN-Systemen keine Übermittlung von Zählimpulsen mehr möglich ist.

Das hier vorgeschlagene Verfahren zur synchronen Konvertierung der Gebühren in Zählimpulse berechnet gemäß Formel (5) die Zeit voraus, in der der nächste Zählimpuls versendet wird:

$$(5) \qquad t_{\text{nächster\_Zählim puls}} = Wert_{\text{Zählim puls}} * Periodendauer\ /\ Subtarif$$

wobei $t_{\text{nächster\_Zählimpuls}}$ die Zeit in Sekunden ist, in der der nächste Zählimpuls versendet wird, $Wert_{\text{Zählimpuls}}$ der Betrag ist, der einem Zählimpuls entspricht, die Periodendauer die Zeit ist, mit der die Gebühren als Betrag aufsummiert werden und der Subtarif die Gebühren eines Tarifs darstellt.

Figur 3a zeigt eine grafische Darstellung der erzeugten und versendeten Zählimpulse während der Dauer einer Verbindung. Zu Beginn der Verbindung wird ein Zählimpuls versendet. Gemäß der vorliegenden Erfindung wird die Zeit, zu welcher der nächste Zählimpuls versendet wird, berechnet. Nach Ablauf dieser Zeit wird ein weiterer Zählimpuls versendet.

Der beschriebene Mechanismus zur Vorausberechnung muß ebenfalls Mindest- bzw. Grundgebühren beinhalten. Diese Grundgebühren entsprechen nicht zwingenderweise exakt dem Vielfachen des Wertes eines Zählimpulses. Die Dezimalstellen, die gegebenenfalls nach einer Konvertierung entstehen, müssen bei der weiteren Berechnung der Zeit berücksichtigt werden. Ebenfalls müssen Wechsel der Tarife oder Subtarife während der Verbindungsdauer berücksichtigt werden. Ein neuer Subtarif bedeutet in der Regel eine geänderte Gebühr pro Periodendauer und daraus resultiert ein neues Zeitintervall zwischen den Zählimpulsen. Zusätzlich kann es sein, daß die aufsummierten Gebühren am Ende eines vorausgehenden Subtarifs nicht genau dem Vielfachen eines Zählimpulses entsprechen. Diese Faktoren müssen mit berücksichtigt werden, wenn die Zeit bis zum nächsten Zählimpuls berechnet wird.

Weiterhin müssen Fehler bei der Zeiterfassung und bei der Reaktion auf Ereignisse berücksichtigt werden. Als Folge davon kann es vorkommen, daß ein neuer Zählimpuls erzeugt wird, bevor die aufsummierten Gebühren ein neues Vielfaches der Zählimpulse erreicht haben. Das heißt, daß unabhängig von den bereits gesendeten Zählimpulsen, zu jedem Zeitpunkt, an dem ein Zählimpuls versendet wurde, die aufsummierten Gebühren neu berechnet werden müssen. Auf dieser Grundlage erfolgt dann die Berechnung der Zeit, zu welcher ein neuer Zählimpuls versendet wird.

Die Gebühren müssen zu Beginn jedes Zeitraums gezählt werden, für welchen sie gelten. Für die Konvertierung von aufsummierten Gebührenbeträgen in Zählimpulse müssen Werte, die nicht ganzzahlig sind, aufgerundet werden.

Werden alle diese Faktoren berücksichtigt, so resultiert daraus der nachfolgend beschriebene Algorithmus:

Zu Beginn der Verbindung werden die Grundgebühren und die erste periodische Gebühr des ersten Subtarifs zusammengezählt und in Zählimpulse umgewandelt. Die aufsummierten Gebühren und die daraus resultierende Anzahl der Zählimpulse werden gespeichert. Die Zeit bis zum Versenden des nächsten Zählimpulses wird dann anhand der Formel (6), die eine vervollständigte Version der Formel (5) ist, berechnet.

$$(6) \qquad t_{\text{nächster\_Zählim puls}} = (Wert_{\text{Zählim plus}} - \mathrm{frac}(Summe\_Gebühren)) * Periodendauer\ /\ Subtarif$$

wobei frac(Summe Gebühren) den Betrag darstellt, um den der Zählimpuls von den tatsächlichen Gebühren abweicht.

Diese Prozedur - Berechnen der aktuellen Gebühren, Konvertierung der Gebühren in Zählimpulse, Speichern des Ergebnisses - wird jedesmal wiederholt, wenn die Zeit $t_{\text{nächster\_Zählimpuls}}$ abgelaufen ist und wenn ein neuer Tarif oder Subtarif beginnt.

Eine weitere Möglichkeit Beträge in Zählimpulse zu konvertieren besteht darin, daß in der Vermittlungsstelle ständig (z.B. jede Sekunde) die neu angefallenen Gebühren neu berechnet werden und aufgrund des Ergebnisses die Anzahl der Zählimpulse berechnet wird. Jedoch erfordert diese Methode einen hohen Aufwand an Rechnerleistung.

Figur 3b zeigt ein Beispiel für eine Verbindung, in der eine Grundgebühr und mehrere Subtarife zur Anwendung kommen. Am Anfang der Verbindung werden, entsprechend der Grundgebühr, zwei Zählimpulse erzeugt und versendet.

Anzumerken ist noch, daß die Zeit zwischen den versendeten Zählimpulsen vom Betrag abhängt, den ein Zählimpuls darstellt und sehr groß (üblicherweise einige Minuten) im Vergleich zur Periodendauer (üblicherweise 1 s) ist, mit der die Gebührenbeträge aufsummiert werden.

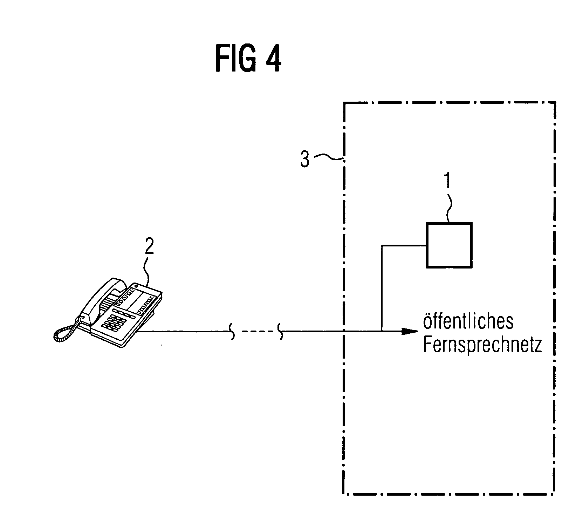

Figur 4 zeigt eine Vermittlungsstelle 3 mit der erfindungsgemäßen Vorrichtung 1 zum Versenden von Zählimpulsen und mit einem an die Vermittlungsstelle 3 angeschlossenen Endgerät 2 (z.B. ein Telefon) eines Teilnehmers.

In der Vorrichtung 1 zum Versenden von Zählimpulsen sind dabei zum einen Mittel realisiert, mit denen die Gebühreninformationen, die in der Vermittlungsstelle 3 als Formel zur Berechnung der Gebühren in Währung definiert sind, unter Anwendung der beschriebenen Formeln in Zählimpulse umrechnen. Diese Mittel sind in Vorteilhafter Weise als Mikrocomputersystem ausgebildet.

Zum anderen ist in dieser Vorrichtung 1 eine Vorrichtung realisiert, die die Zählimpulse an das Endgerät des Teilnehmers versendet; im Beispiel der analogen Telefonie über 16-kHz-Töne.

Die Vorrichtung 1 versendet dabei, je nachdem um welche Art von Endstelle (z.B. analog oder ISDN) es sich handelt, die Zählimpulse entweder synchron oder asynchron.

Ebenso ist eine Umwandlung von Zählimpulsen in Beträge denkbar, wenn die Gebühren beispielsweise in der Vermittlungsstelle als Zählimpulse vorliegen und das jeweilige Endgerät des Teilnehmers nur Beträge verarbeiten kann. Die Konvertierung von Zählimpulsen in Beträge ist jedoch wesentlich einfacher, da jeder Zählimpuls einen bestimmten Betrag darstellt. Bei dieser Konvertierung wird dann lediglich bei jedem empfangenen Zählimpuls der entsprechende Betrag aufsummiert.

**Patentansprüche**

1. Vorrichtung zur Verarbeitung von Gebühreninformationen für zumindest eine Verbindung innerhalb zumindest eines Kommunikationsnetzes,
   **dadurch gekennzeichnet,**

   - daß die Gebühreninformationen zumindest teilweise als Betragswerte verfügbar sind, und
   - daß die Vorrichtung (1) derart ausgestaltet ist, daß die für die Verbindung anfallenden Betragswerte in eine entsprechende Anzahl von Zählimpulsen, die jeweils einen bestimmten Betrag entsprechen, umgerechnet werden, wobei die Zählimpulse oder die Anzahl der Zählimpulse für eine weitere Informationsverarbeitung durch die Vorrichtung (1) bereitgestellt werden oder von dieser abrufbar sind.

2. Vorrichtung nach Anspruch 1,
   **dadurch gekennzeichnet,**

   daß die Vorrichtung (1) mit zumindest einem Endgerät (2) eines Teilnehmers verbunden ist,
   daß die Vorrichtung (1) derart ausgestaltet ist, daß die Zählimpulse oder die Anzahl der Zählimpulse an das zumindest eine Endgerät (2) zur Gebührenanzeige übermittelt werden oder von diesem abrufbar sind.

3. Vorrichtung nach Anspruch 1 oder 2,
   **dadurch gekennzeichnet,**
   daß die Vorrichtung (1) derart ausgestaltet ist, die Anzahl der Zählimpulse während der Dauer der Verbindung aktualisiert werden.

4. Vorrichtung gemäß Anspruch 2 oder 3,
   **dadurch gekennzeichnet,**
   daß sie die Zählimpulse in regelmäßigen Zeitabständen an das Endgerät (2) versendet.

5. Vorrichtung gemäß Anspruch 2 oder 3,
   **dadurch gekennzeichnet,**
   daß sie einen Zählimpuls an das Endgerät (2) versendet, sobald die neu angefallenen Gebühren dem Betrag eines Zählimpulses entsprechen.

6. Vorrichtung nach einem der Ansprüche 1 bis 5,
   **dadurch gekennzeichnet,**
   daß sie die Zählimpulse zu Beginn einer Zählperiode versendet.

7. Verfahren zur Verarbeitung von Gebühreninformationen für zumindest eine Verbindung innerhalb zumindest eines Kommunikationsnetzes,
**dadurch gekennzeichnet,**

bei dem die Gebühreninformationen zumindest teilweise als Betragswerte verfügbar sind,
bei dem die für eine Verbindung anfallenden Betragswerte in eine entsprechende Anzahl von Zählimpulsen, die jeweils einem bestimmten Betrag entsprechen, umgerechnet werden, und
daß die Zählimpulse oder die Anzahl der Zählimpulse für eine weitere Informationsverarbeitung innerhalb des zumindest einen Kommunikationsnetzes verfügbar sind oder abrufbar sind.

8. Verfahren nach Anspruch 7,
**dadurch gekennzeichnet,**
daß weitere für die Verbindung anfallende Gebühren in Form von Zählimpulsen der Anzahl der Zählimpulse hinzugefügt werden.

9. Verfahren nach Anspruch 7 oder 8,
**dadurch gekennzeichnet,**

- daß die Zählimpulse oder die Anzahl der Zählimpulse an zumindest ein an das zumindest eine Kommunikationsnetz angeschlossenes Kommunikationsendgerät (2) zur Gebührenanzeige übermittelt werden oder von diesem abrufbar sind, und/oder
- daß mit Hilfe der Anzahl der Zählimpulse verbindungsindividuelle und/oder teilnehmerindividuelle Gebühren überwacht werden, und/oder
- daß die Anzahl der Gebührenimpulse in zumindest einem des zumindest einen Kommunikationsnetzes gespeichert werden,

10. Verfahren nach einem der Ansprüche 7 bis 9,
**dadurch gekennzeichnet,**
daß die Anzahl der Zählimpulse während der Dauer der Verbindung oder am Ende der Verbindung aktualisiert werden.

11. Verfahren einem der Ansprüche 9 bis 10,
**dadurch gekennzeichnet,**
daß die Zählimpulse in regelmäßigen Zeitabständen an das Endgerät (2) übermittelt werden.

12. Verfahren nach einem der Ansprüche 9 bis 10,
**dadurch gekennzeichnet,**
daß ein Zählimpuls an das Endgerät (2) übermittelt wird, sobald die neu angefallenen Gebühren dem Betrag eines Zählimpulses entsprechen.

13. Verfahren nach einem der Ansprüche 9 bis 12,
**dadurch gekennzeichnet,**
daß die Zählimpulse zu Beginn einer Zählperiode versendet werden.

14. Verfahren nach einem der Ansprüche 9 bis 13,
**dadurch gekennzeichnet,**
daß das zumindest eine Kommunikationsnetz als drahtgebundenes Fernsprechnetz und/oder als mobiles Kommunikationsnetz ausgestaltet ist.

# FIG 1

Betrag

Tarifdefinition

Grundgebühr

Zeit

1s

Sub-Tarif 1

Dauer

Sub-Tarif 1 | Sub-Tarif 2 | Sub-Tarif 3 | Sub-Tarif 4

Betrag

Generierte
Gebühren

Verbindungsgebühren

. . .

Grundgebühr

Zeit

Verbindungsanfang

Verbindungsende

FIG 2a

FIG 2b

EP 1 128 652 A2

FIG 3a

FIG 3b

# FIG 4

öffentliches
Fernsprechnetz